Europäisches Patentamt

European Patent Office

Office européen des brevets

(19)

(11) Publication number: 0 365 243
A1

## (12) EUROPEAN PATENT APPLICATION

(21) Application number: 89310568.4

(22) Date of filing: 14.10.89

(51) Int. Cl.5: F16C 1/26

(30) Priority: 17.10.88 US 258631

(43) Date of publication of application:
25.04.90 Bulletin 90/17

(84) Designated Contracting States:
DE ES FR GB IT

(71) Applicant: BABCOCK INDUSTRIES INC.
425 Post Road
Fairfield Connecticut 06430-0970(US)

(72) Inventor: Lichtenberg, Norman B.
5445 Boros
Troy Michigan 48098(US)
Inventor: Totten, Jeffrey E.
20033 Village Green Court
Trenton Michigan 48183(US)
Inventor: Cunningham, Barbara A.
519 E. Lincoln
Royal Oak Michigan 48067(US)
Inventor: Curran, Gregory P.
2773 West Russell Road
Tecumseh Michigan 49286(US)
Inventor: Davis, Ray A.
3843 Scotsmoore Lane
Toledo Ohio 43607(US)

(74) Representative: Singleton, Jeffrey et al
ERIC POTTER & CLARKSON 27 South Street
Reading Berkshire, RG1 4QU(GB)

(54) Cable mountings.

(57) A cable mounting construction comprises a bracket (20) having a slot (21) therein which has an open end (22), a closed end (23) and sides (24,25), and a fitting (30) adapted to be snapped into position in the slot (21). The fitting (30) is provided with at least one flexible tab (34) adapted to snap into a recess (26) in a side of the slot (21). In one form, a second flexible tab (34) snaps into a recess (27) in the other side of the slot (21). In another form, the fitting (30) and bracket (20) have complementary surfaces (28,38) preventing relative rotation between the fitting and the bracket. In another form, a plurality of fittings (30a, 30b) are provided in the same slot (21). In all forms, the fitting can be removed by flexing the or each tab (34) out of engagement with the complementary recess.

FIG.1

FIG.5

## CABLE MOUNTINGS

This invention relates to mounting constructions and particularly, to cable mounting constructions.

In the mounting of cables which comprise an outer member such as a conduit and an inner member such as a flexible strand, it is common to guide or hold portions of either or both of the members in position on a bracket. Typical prior patents showing such a construction are US-A-3,885,767 and 4,339,213.

Among the problems that have been encountered in such mounting constructions is the inability to ensure that the fitting supporting the cable component is in place. Another problem is that some constructions require the use of tools.

Accordingly, among the objectives of the present invention are to provide, in a preferred embodiment, a cable mounting construction which will function manually to hold a cable fitting on a bracket; which will permit mounting of adjacent cable components at the same location; which will result in the snapping of the fitting in position ensuring proper mounting; wherein the proper mounting can be readily visually determined; and wherein the fitting can be made of moldable materials.

The present invention is defined in the appended claims and provides a cable mounting construction comprising a bracket having a slot therein which has an open end, a closed end and sides, and a fitting adapted to be snapped into position in the slot. The fitting is provided with at least one flexible tab that is adapted to snap into a recess in a side of the slot. In one form, a second flexible tab snaps into a recess in the other side of the slot. In another form, the fitting and bracket have complementary surfaces preventing relative rotation between the fitting and the bracket. In another form, a plurality of fittings are provided in the same slot. In all forms, the fitting can be removed by flexing the tab out of engagement with the complementary recess.

Cable mountings in accordance with the present invention will now be described in greater detail, by way of example, with reference to the accompanying drawings, in which:-

Figure 1 is a fragmentary elevational view of a bracket utilised in the invention,

Figure 2 is an end view of a fitting utilised in the invention,

Figure 3 is a fragmentary side elevational view of the fitting shown in Figure 2,

Figure 4 is a fragmentary plan view of the fitting shown in Figure 3,

Figure 5 is an end view showing the fitting as mounted in the bracket,

Figure 6 is a part sectional plan view showing the ready removability of the fitting from the bracket,

Figure 7 is an end view of a modified form of fitting,

Figure 8 is an end view of a further modified form of fitting adapted to be used with the fitting of Figure 7,

Figure 9 is a fragmentary view of a bracket adapted to be utilised with the fittings of Figures 7 and 8,

Figure 10 is an assembled view of the mounting structure incorporating the fittings of Figures 7 and 8 and the bracket of Figure 9,

Figure 11 is a fragmentary elevational view of a modified form of a bracket,

Figure 12 is a fragmentary end view of a modified fitting as mounted in the bracket of Figure 11,

Figure 13 is a fragmentary sectional view taken along the line 13-13 in Figure 12, and

Figure 14 is a view similar to Figure 10 showing a modified form.

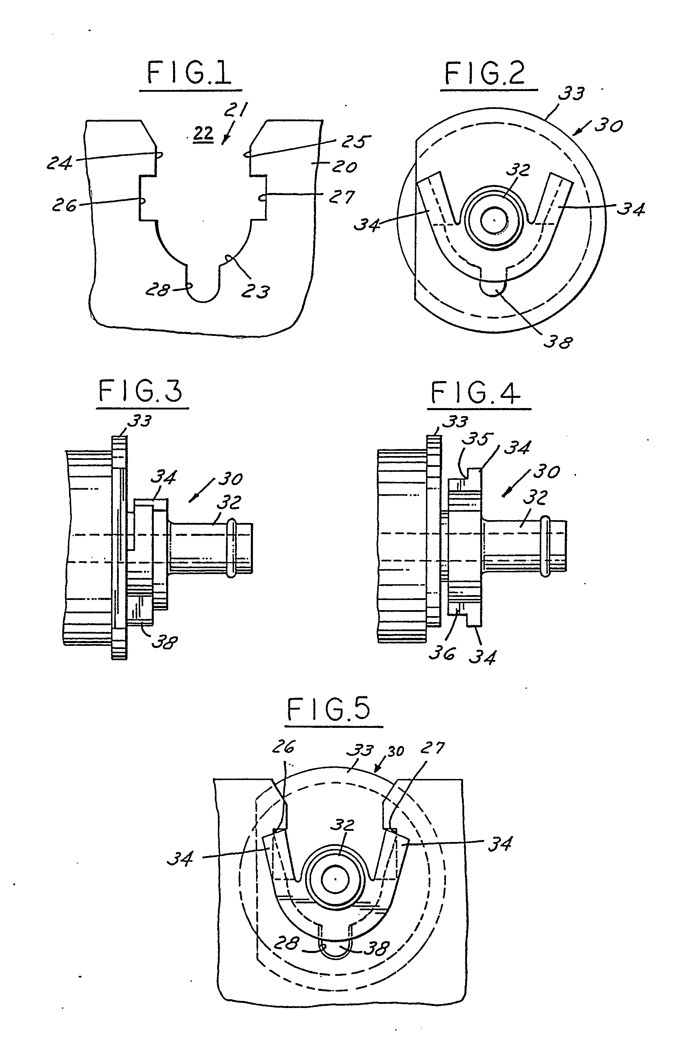

Referring first to Figures 1 - 6, the cable element mounting construction embodying the invention comprises a bracket 20 having a wall that includes mounting slot 21 which has an open end 22, a generally semi-circular closed end 23, and sides 24, 25. The sides 24, 25 include respective recesses 26, 27 in the form of rectangular notches, and the closed end 23 includes an axial or radial notch 28 having a rounded closed end. A fitting 30 is adapted to be associated with the slot 21 and comprises a body 31 preferably made of moldable material such as that known under the Registered Trade Mark NYLON, glass-filled NYLON, or other synthetic plastics material which in thin section is capable of flexing.

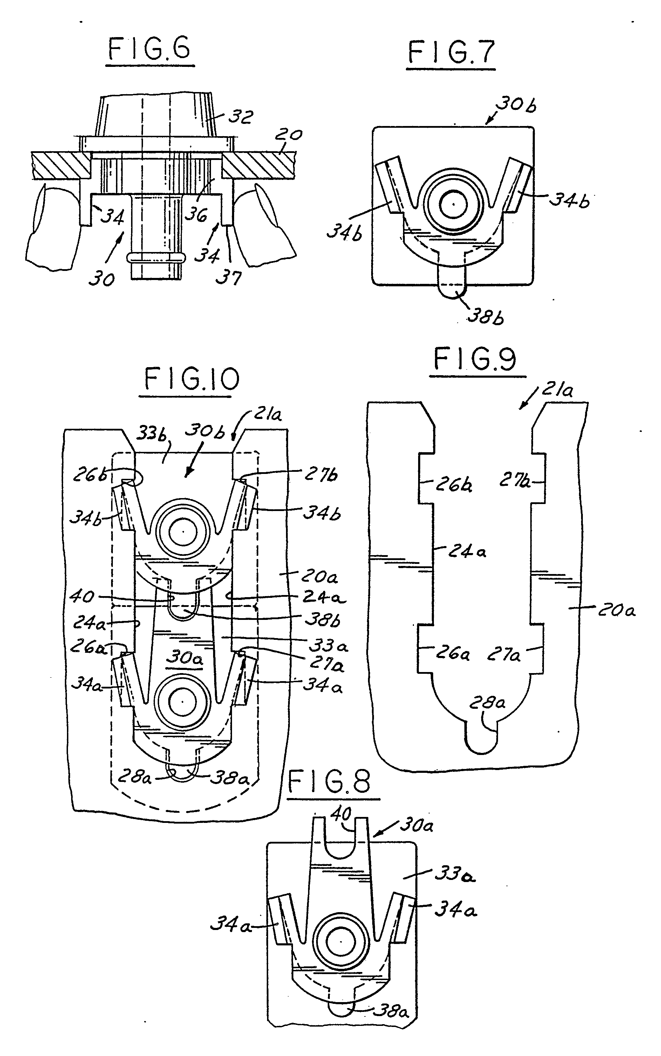

The fitting body 31 includes a tubular portion 32 which services to guide or engage a portion of a cable, a radially-extending planar portion of flange 33 that is adapted to engage one side of the bracket 20, and a pair of flexible tabs 34 extending generally radially outwardly. Each tab 34 includes a shoulder 35 which forms an inner flange 36 and an outer flange 37 (Figure 6). The inner flange 36 is adapted to contact the notch 26 or 27, and the outer flange 37 is adapted to contact the other side of the bracket 20. The fitting body 31 further includes a radially-extending projection 38 adapted to engage the recess 28 in the closed end 23 of the mounting slot 21.

In order to insert the fitting 30 in the slot 21, it is positioned with the planar portion 33 engaging one surface of the bracket 20 and the shoulders 35 engaging the other surface of bracket 20. The fitting 30 is then moved axially of the slot 21 until the flexible tabs 34 snap into the recesses 26, 27 in the sides 24, 25 of the slot 21 and the radial projection 38 engages the notch 28.

In order to remove the fitting 30, the flanges 36 of tabs 34 are grasped as shown in Figure 6 and flexed towards one another to disengage the tabs 34 from the recesses 26, 27 thereby permitting removal of the fitting 30 by movement axially outwardly of the slot 21.

In the modified form of mounting construction shown in Figures 7 - 10, the slot 21a in bracket 20a is formed with a first set of recesses 26a, 27a and notch 28a, and a second set of recesses 26b, 27b in the respective side walls 24a, 24b thereof and two fittings 30a, 30b are provided permitting stacking or positioning cable components in close proximity on the same bracket. The inner fitting 30a as shown in Figure 8 comprises a body 33a having a pair of tabs 34a and a projection 38a, as in the previous form of fitting, and, in addition, includes a recess 40 in the end thereof opposite the projection 38a. In addition, the planar portion 33a is rectangular. The second fitting 30b is similar to that shown in Figure 2 except that again the planar portion 33b is rectangular so that the two rectangular portions 33a, 33b of the two fittings 30a, 30b abut one another to prevent relative rotation between the fittings.

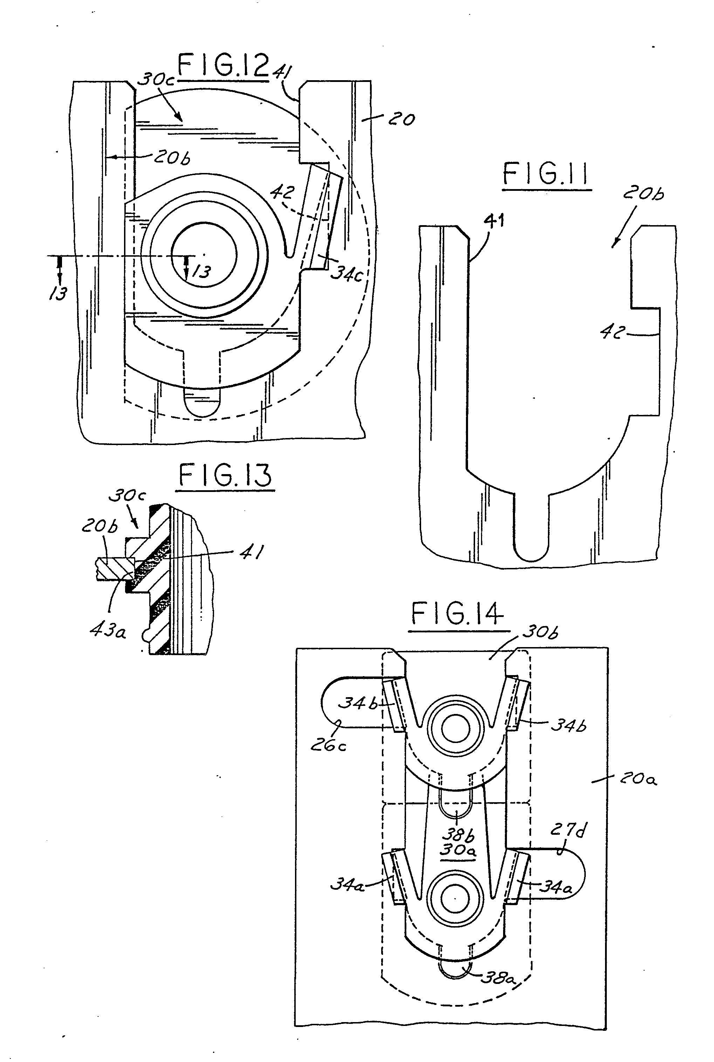

In the form shown in Figures 11-13, the bracket 20b has a slot 41 and is provided with a single recess 42 in one side wall, with the fitting 30C being provided with a single flexible tab 34c which engages the recess 42. Rotation between the fitting 30C and the slot 21b is prevented, inter alia, by a slot 43a in the edge of the fitting 30C adapted to engage the side wall of the slot 41 of the bracket 20b.

The form of the invention shown in Figure 14 is substantially the same as shown in Figure 10 except that some of the recesses 26c, 27d are deeper such that the corresponding tabs 34b and 34a do not engage the bases of the recesses as in Figure 10. This modification may also be effected in the embodiment of Figures 1 - 6.

It can thus be seen that there has been provided a cable mounting construction comprising a bracket having a slot therein which has an open end, a closed end and sides, and a fitting adapted to be snapped into position in the slot. The fitting is provided with at least one flexible tab that is adapted to snap into a complementary recess in a side of the slot. In one form, a second flexible tab snaps into a complementary recess in the other side of the slot. In another form, the fitting and bracket have complementary surfaces preventing relative rotation between the fitting and the bracket. In another form, a plurality of fittings are provided in the same slot. In all forms, the fitting can readily be removed by flexing the tab out of engagement with the complementary recess.

## Claims

1. A cable mounting construction characterised in that it comprises;
a bracket (20;20a;20b) having a slot (21;21a;41) therein which has an open end (22) a closed end (23) and sides (24,25;24a,25a),
at least one recess (26;26a;26b;26c) in one side of the slot,
and a first fitting (30;30a;30b;30C) adapted to be snapped into position in the slot,
the first fitting including at least one flexible tab (34;34a;34b;34c) adapted to snap into a corresponding recess (26;26a;26b;26c) in the bracket slot (21;21a;41).

2. A cable mounting construction acoording to claim 1, characterised in that the bracket (20;20a;20b) and fitting (30;30a;30b;30C) include interengaging means (28,38; 28a,38a;40,38b) for preventing rotation of the first fitting relative to the bracket.

3. A cable mounting construction according to claim 1 or 2, characterised in that the bracket (20;20a;20b) includes a second recess (27;27a;27b;27d) in the other side of the slot (21;21a;41) the first fitting (30;30a; 30b;30C) including a second flexible tab (34;34a;34b;34c) to snap into the second recess.

4. A cable mounting construction according to claim 1 or 2, characterised in that the slot (21;21a;41) includes a second recess along said one side of the slot, the first fitting (30;30a;30b;30C) having a second flexible tab engageable with the second recess.

5. A cable mounting construction according to any of the preceding claims, characterised in that the bracket slot (21a) has a third recess (26b) in one side and a fourth recess (27b) in the other side, and in that a second fitting is provided which comprises third and fourth flexible tabs (34b) adapted, respectively, to snap into the third and fourth recesses.

6. A cable mounting construction according to claim 2, and any of claims 3 to 5 when appended thereto, characterised in that the interengaging means comprises a recess (28;28a) in the base of said slot (21;21a;41) the first fitting having a projection (38;38a) engageable with that recess.

7. A cable mounting construction according to claim 5, characterised in that further interengaging means (40; 38b) are provided between the first and second fittings.

8. A cable mounting construction according to any of the preceding claims, characterised in that at least one recess (26,27; 26a,27a;26b,27b) has a depth such that the corresponding tab (34;34a;34b) is engageable with the base of the recess.

9. A cable mounting construction according to any of the preceding claims wherein at least one recess (26c, 27d) has a depth such that the corresponding tab (34a, 34b) does not engage the base of that recess.

10. A cable mounting construction according to any of the preceding claims, characterised in that it includes still further interengaging means (41,43a) between at least the first fitting (30C) and the other side of said slot (41).

11. A cable mounting construction according to claim 10, characterised in that the still further interengaging means comprises a slot (43a) in the fitting (30C) into which the side of the slot (41) in the bracket (20b) in use extends.

12. A cable mounting construction according to any of the preceding claims, characterised in that the or each fitting (30,30a,30b) is made of a synthetic plastics material.

13. For use in cable mounting construction comprising a bracket (20;20a;20b) having a slot (21;21a;41) therein which has an open end (22), a closed end (23), and sides (24,25;24a,25a)and at least one recess (26;26a;26b;26c) in a side of the slot,
a cable mounting fitting (30;30a;30b;30C) adapted to be snapped into position in the slot,
the fitting including at least one flexible tab (34;34a;34b;34c) adapted to snap into a corresponding recess in the bracket slot.

14. A cable mounting construction according to claim 13 when appended to any of claims 2 to 12.

EP 0 365 243 A1

FIG.1

FIG.2

FIG.3

FIG.4

FIG.5

## FIG.6

## FIG.7

## FIG.10

## FIG.9

## FIG.8

EP 0 365 243 A1

FIG.12

FIG.11

FIG.13

FIG.14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 239 984 (BMW)<br>* Whole document * | 1-4,9,<br>10,12-<br>14 | F 16 C 1/26 |
| A | EP-A-0 223 470 (TELEFLEX)<br>* Whole document * | 1,2,5-7<br>,9-14 | |
| A | US-A-4 177 691 (FILLMORE)<br>* Whole document * | 1-4,8,<br>12-14 | |

TECHNICAL FIELDS SEARCHED (Int. Cl.5)

F 16 C

The present search report has been drawn up for all claims

| Place of search | Date of completion of the search | Examiner |
|---|---|---|
| THE HAGUE | 07-12-1989 | ORTHLIEB CH.E. |

EPO FORM 1503 03.82 (P0401)